(19) Europäisches Patentamt
European Patent Office
Office européen des brevets

(11) **EP 4 287 341 A1**

(12) **EUROPEAN PATENT APPLICATION**
published in accordance with Art. 153(4) EPC

(43) Date of publication:
06.12.2023 Bulletin 2023/49

(21) Application number: 22887768.4

(22) Date of filing: 01.11.2022

(51) International Patent Classification (IPC):
**H01M 10/058** (2010.01)  **H01M 10/0565** (2010.01)

(52) Cooperative Patent Classification (CPC):
**H01M 10/0565; H01M 10/058;** Y02E 60/10;
Y02P 70/50

(86) International application number:
**PCT/KR2022/016946**

(87) International publication number:
**WO 2023/075574 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 01.11.2021 KR 20210148315

(71) Applicant: **LG Energy Solution, Ltd.**
**Seoul 07335 (KR)**

(72) Inventors:
• **RYU, Ji-Hoon**
**Daejeon 34122 (KR)**
• **YOON, Yeo-Min**
**Daejeon 34122 (KR)**
• **LEE, Su-Rim**
**Daejeon 34122 (KR)**
• **CHO, Sung-Ju**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD OF PREPARING GEL POLYMER ELECTROLYTE SECONDARY BATTERY AND GEL POLYMER ELECTROLYTE SECONDARY BATTERY PREPARED THEREBY**

(57) Provided is a secondary battery having a structure including an internal core portion which contains a liquid electrolyte maintaining a liquid phase while not being gelled through crosslinking, and is surrounded with a peripheral portion containing an electrolyte gelled through the crosslinking to a predetermined crosslinking degree or higher. It is possible to provide an effect of improving ion conductivity by virtue of such structural characteristics and to provide improved mechanical properties, thereby providing the battery with improved rigidity and safety at the same time. In addition, the liquid electrolyte is confined by the gel polymer electrolyte to provide an effect of preventing electrolyte leakage. Further, the secondary battery can be obtained by a simple method that includes crosslinking only the peripheral portion of the electrode assembly by controlling the gelling degree of the electrolyte depending on the gradient of oxygen concentration in the electrode assembly. As a result, there is no adverse effect upon the processing efficiency, since any separate device or system line is not required to carry out the crosslinking.

FIG. 1

**Description**

TECHNICAL FIELD

The present application claims priority to Korean Patent Application No. 10-2021-0148315 filed on November 1, 2021 in the Republic of Korea, the disclosures of which are incorporated herein by reference. The present disclosure relates to a method for manufacturing a lithium secondary including a gel polymer electrolyte and a gel polymer electrolyte secondary battery obtained thereby.

BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. In this context, electrochemical devices have been most spotlighted. Among such electrochemical devices, development of rechargeable secondary batteries has been focused.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Such lithium secondary batteries may be classified into lithium-ion batteries using a liquid electrolyte and lithium polymer batteries using a polymer electrolyte, depending on the electrolyte used specially therefor.

Lithium-ion batteries have an advantage of high capacity, but have a risk of electrolyte leakage and explosion due to the use of a lithium salt-containing liquid electrolyte. Therefore, lithium-ion batteries are disadvantageous in that they require a complicated battery design in order to provide against such a disadvantage.

On the other hand, lithium polymer batteries use a solid polymer electrolyte or an electrolyte-containing gel polymer electrolyte, and thus show improved safety and may have flexibility. Therefore, lithium polymer batteries may be developed into various types, such as compact batteries or thin film-type batteries. The gel polymer electrolyte may be classified into a coating-type gel polymer electrolyte and an injection-type gel polymer electrolyte, depending on the process for preparing the same. The injection-type gel polymer electrolyte may be prepared by injecting a liquid electrolyte including a crosslinkable monomer to a cell, wetting an electrode assembly uniformly with the liquid electrolyte, and carrying out a crosslinking process. During the crosslinking, the electrolyte forms a matrix and is converted into a gel-like electrolyte having no flowability.

Such a gel electrolyte shows no electrolyte flowability, and thus is advantageous in that it causes no problems about heat resistance, safety and leakage, and improves the cell strength so that the cell may be strong against external impact to provide high physical safety. However, the gel electrolyte shows lower ion conductivity and higher resistance as compared to a liquid electrolyte. Therefore, a battery using such a gel electrolyte tends to show lower life characteristics as compared to a battery using a liquid electrolyte alone. Under these circumstances, there is a need for improvement of the ion conductivity of a gel polymer electrolyte.

DISCLOSURE

Technical Problem

The present disclosure is designed to solve the problems of the related art, and therefore the present disclosure is directed to providing a secondary battery including a gel polymer electrolyte and having high ion conductivity. The present disclosure is also directed to providing a method for manufacturing a secondary battery including an injection-type gel polymer electrolyte using radical thermal initiation reaction, wherein the gel polymer electrolyte has improved ion conductivity. It will be easily understood that the objects and advantages of the present disclosure may be realized by the means shown in the appended claims and combinations thereof.

Technical Solution

According to the first embodiment of the present disclosure, there is provided a method for manufacturing a secondary battery containing a gel polymer electrolyte, including the steps of: (S10) introducing an electrode assembly to a battery casing; (S20) injecting a composition for forming a gel polymer electrolyte into the battery casing; (S30) primarily sealing the battery casing under the atmosphere and carrying out aging; (S40) releasing the primary sealing and carrying out degassing; and (S50) subjecting the resultant product of step (S40) to crosslinking, wherein the secondary battery includes a gel polymer electrolyte in which the electrolyte is partially crosslinked to a predetermined crosslinking degree or higher, and the crosslinking degree is increased from the core portion of the battery to the outside of the battery.

According to the second embodiment of the present disclosure, there is provided the method for manufacturing a secondary battery containing a gel polymer electrolyte as defined in the first embodiment, wherein step (S40) is carried out under a gas atmosphere having a concentration of oxygen of less than 20 vol%, under an atmosphere including 90 vol% or more of nitrogen ($N_2$), or under an atmosphere containing 90 vol% or more of inert gas.

According to the third embodiment of the present disclosure, there is provided the method for manufacturing a secondary battery containing a gel polymer electrolyte as defined in the first or the second embodiment, wherein the secondary battery includes a core portion containing a gel polymer electrolyte having a lower crosslinking degree, and a peripheral portion surrounding the core portion and containing a gel polymer electrolyte having a higher crosslinking degree as compared to the core portion.

According to the fourth embodiment of the present disclosure, there is provided the method for manufacturing a secondary battery containing a gel polymer electrolyte as defined in any one of the first to the third embodiments, wherein the composition for a gel polymer electrolyte includes: a lithium salt; a non-aqueous organic solvent; a polymerization initiator; and at least one polymerizable compound selected from the group consisting of a polymerizable monomer, oligomer and copolymer.

According to the fifth embodiment of the present disclosure, there is provided the method for manufacturing a secondary battery containing a gel polymer electrolyte as defined in any one of the first to the fourth embodiments, which further includes a step of injecting oxygen into the battery casing, before carrying out step (S30).

According to the sixth embodiment of the present disclosure, there is provided the method for manufacturing a secondary battery containing a gel polymer electrolyte as defined in any one of the first to the fifth embodiments, wherein the aging in step (S30) is carried out at a temperature ranging from room temperature to 45°C or higher.

According to the seventh embodiment of the present disclosure, there is provided the method for manufacturing a secondary battery containing a gel polymer electrolyte as defined in the sixth embodiment, wherein the degassing in step (S40) is carried out within such a range that the volume of the battery may be maintained at 75-90 vol% based on 100 vol% of the volume of the battery before releasing the sealing.

According to the eighth embodiment of the present disclosure, there is provided the method for manufacturing a secondary battery containing a gel polymer electrolyte as defined in any one of the first to the seventh embodiments, wherein the crosslinking in step (S50) is carried out at a temperature of 60°C or higher.

According to the ninth embodiment of the present disclosure, there is provided the method for manufacturing a secondary battery containing a gel polymer electrolyte as defined in any one of the first to the eighth embodiments, which further includes an activation step after carrying out step (S50).

According to the tenth embodiment of the present disclosure, there is provided a secondary battery which is obtained by the method as defined in any one of the first to the ninth embodiments, includes a gel polymer electrolyte showing a crosslinking degree increasing stepwise or gradually from the inner part of the battery to the outer part of the battery, and has a core portion containing a gel polymer electrolyte having a lower crosslinking degree and a peripheral portion surrounding the core portion and containing a gel polymer electrolyte having a higher crosslinking degree as compared to the core portion.

According to the eleventh embodiment of the present disclosure, there is provided the secondary battery as defined in the tenth embodiment, wherein the peripheral portion has a crosslinking degree of 80 wt% or more, and the core portion has a crosslinking degree of less than 80 wt%.

According to the twelfth embodiment of the present disclosure, there is provided the secondary battery as defined in the tenth or the eleventh embodiment, wherein the core portion has a crosslinking degree of less than 40 wt%.

Advantageous Effects

The secondary battery according to the present disclosure has a structure including an internal core portion which contains a liquid electrolyte maintaining a liquid phase while not being gelled through crosslinking, and is surrounded with a peripheral portion containing an electrolyte gelled through the crosslinking to a predetermined crosslinking degree or higher. It is possible to provide an effect of improving ion conductivity by virtue of such structural characteristics and to provide improved mechanical properties, thereby providing the battery with improved rigidity and safety at the same time. In addition, the liquid electrolyte is confined by the gel polymer electrolyte to provide an effect of preventing electrolyte leakage. Further, the secondary battery according to the present disclosure can be obtained by a simple method that includes crosslinking only the peripheral portion of the electrode assembly by controlling the gelling degree of the electrolyte depending on the gradient of oxygen concentration in the electrode assembly. As a result, there is no adverse effect upon the processing efficiency, since any separate device or system line is not required to carry out the crosslinking.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 is a sectional view illustrating the secondary battery according to an embodiment of the present disclosure.

FIGS. 2 and 3 illustrate the method for manufacturing a secondary battery according to an embodiment of the present disclosure, wherein the oxygen concentration of the peripheral portion of the electrode assembly is controlled to be lower than the oxygen concentration of the core portion through degassing, before carrying out a gelling step.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes, has or is provided with an element' does not preclude the presence of any additional elements but means that the part may further include the other elements, unless otherwise stated.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and 'bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

Hereinafter, the present disclosure will be explained in more detail with reference to the accompanying drawings.

The secondary battery according to an embodiment of the present disclosure includes an electrode assembly including at least one negative electrode, at least one separator and at least one positive electrode, independently, wherein the negative electrode, the separator and the positive electrode are stacked successively in such a manner that the negative electrode and the positive electrode may be electrically insulated from each other by the separator. In addition, the secondary battery includes an electrolyte with which the electrode assembly is wetted. According to an embodiment of the present disclosure, the electrolyte in the battery shows a crosslinking degree increasing from the inner part of the battery to the outer part of the battery.

According to an embodiment of the present disclosure, the electrolyte contained in the core portion of the electrode assembly shows a relative lower crosslinking degree and has flowability, while the electrolyte contained in the peripheral portion of the electrode assembly shows a higher crosslinking degree as compared to the core portion and has significantly low flowability or has no flowability. Since the core portion is surrounded with the peripheral portion, the electrolyte present in the core portion and having a lower crosslinking degree is encapsulated with the electrolyte having a higher crosslinking degree, and thus may not be discharged to the outside of the electrode assembly.

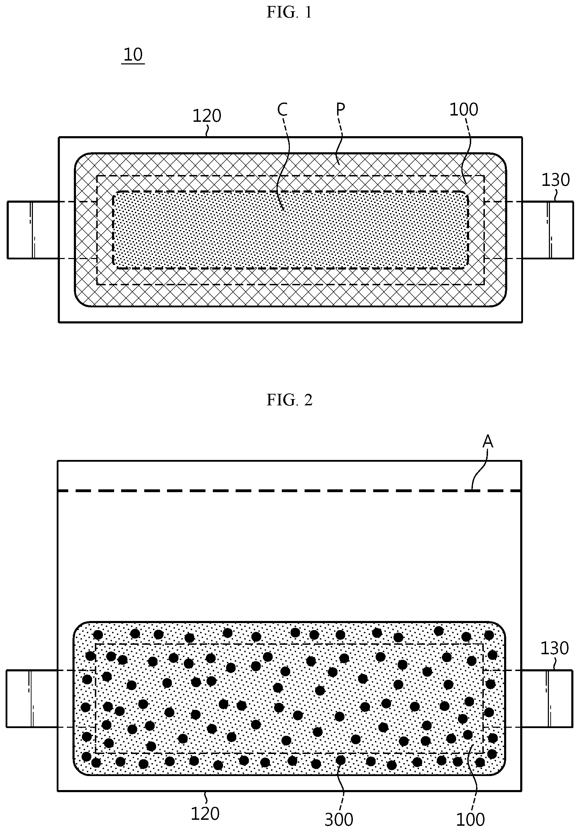

Meanwhile, according to an embodiment of the present disclosure, the electrode assembly may include a transition portion having a crosslinking degree increasing from the core portion toward the peripheral portion. The transition portion may be present between the core portion and the peripheral portion, and the electrolyte in the transition portion may have a crosslinking degree higher than the crosslinking degree of the core portion and lower than that of the peripheral portion. In a variant, the transition portion may not be a portion differentiated from the core portion and the peripheral portion but may refer to a region where the crosslinking degree varies from any point of the core portion toward any point of the peripheral portion. In other words, the electrode assembly according to the present invention includes a core portion and a peripheral portion surrounding the core portion, wherein the core portion is a portion having a relatively lower crosslinking degree of electrolyte as compared to the peripheral portion, and the peripheral portion is a portion having a relatively higher crosslinking degree of electrolyte as compared to the core portion, and may further include a transition portion as a region where the crosslinking degree increases from the core portion toward the peripheral portion. FIG. 1 is a sectional view illustrating the secondary battery 10 according to an embodiment of the present disclosure. The sectional view exemplarily illustrates the section of the electrode assembly in the direction in parallel with the stacking direction of the electrode assembly. Referring to FIG. 1, the battery includes a battery casing 120 in which the electrode assembly 100 is received. The electrode assembly includes at least one negative electrode and at least one positive electrode stacked successively with a separator interposed between both electrodes. The battery includes an electrode tab 130 drawn from the negative electrode/positive electrode. In addition, the battery includes an electrolyte with which the electrode assembly is wetted. The core portion C of the electrode assembly includes an electrolyte showing a lower crosslinking degree and having flowability. According to an embodiment of the present disclosure, the electrolyte of the core portion may have a viscosity of 0-10 cP. Meanwhile, according to an embodiment of the present disclosure, the core portion preferably may show a crosslinking degree of less than 80 wt%, and preferably, less than 40 wt%.

Meanwhile, the core portion is surrounded with the peripheral portion P, and the electrolyte of the peripheral portion shows a relatively higher crosslinking degree as compared to the core portion and preferably has no flowability. According to an embodiment of the present disclosure, the electrolyte of the peripheral portion may have a crosslinking degree of 80-100 wt%. According to an embodiment of the present disclosure, the peripheral portion may show a crosslinking degree of 80-100 wt%, while the core portion may show a crosslinking degree of less than 80 wt%, or less than 40 wt%.

In the battery according to an embodiment of the present disclosure, the electrode assembly may include a core portion, a transition portion and a peripheral portion, wherein the difference in crosslinking degree between the peripheral portion and the core portion may be 10 wt% or more, 20 wt% or more, 30 wt% or more, 40 wt% or more, or 50 wt% or more. In addition, the transition portion having a crosslinking degree higher than the crosslinking degree of the core portion and lower than that of the peripheral portion may be disposed between the peripheral portion and the core portion.

According to an embodiment of the present disclosure, the crosslinking degree may be determined by measuring the residual amount of the unreacted polymerizable compound from the peak of carbon-carbon double bonds through the NMR analysis of the electrolyte collected from each of the peripheral portion and the core portion of the electrode assembly, and inputting the measured value to the following Mathematical Formula 1 to calculate the ratio of the unreacted polymerizable compound based on the collected electrolyte sample:

[Mathematical Formula 1]

$$\text{Crosslinking degree (wt\%)} = 100 - \{\text{Amount of unreacted polymerizable compound} / \text{Amount of collected electrolyte sample}\} \times 100$$

Meanwhile, NMR may be carried out by the method of one dimensional normal nuclear magnetic resonance spectroscopy (1D Normal NMR). Particularly, Burker 700 MHz NMR analyzer may be used together with acetone-$d_6$ as a solvent for a sample under the conditions of $^1$H NMR (zg 30), ns = 32 and d1 = 3 sec.

In addition, the result may be analyzed by taking the peak of ethylene carbonate (EC) having the lowest volatility in $^1$H NMR spectrum as 100, calculating the integral of the acrylate double bond peak of each sample, and normalizing the resultant value with the acrylate double bond area of a reference sample taken as 100 to calculate the relative area value.

However, the scope of the present disclosure is not limited to the above-described method.

In a variant, the initial weight of the collected electrolyte sample is measured, the sample is dipped in decalin solution at 135°C according to ASTM D 2765 to be boiled for 4 hours, the residual weight is measured, and then the ratio of the residual dry weight based on the initial weight may be calculated.

Meanwhile, the viscosity may be determined by using a viscometer, such as Brookfield digital viscometer (RV DV2T). Particularly, the viscosity may be determined under an rpm condition where the torque becomes 20% ($\pm$ 1%), after allowing an object to be analyzed to be in contact with the spindle linked to the viscometer. Meanwhile, according to the present disclosure, the border line between the peripheral portion and the core portion, the border line between the peripheral portion and the transition portion, or the border line between the transition portion and the core portion is defined not by a specific position depending on the dimension or ratio of the length, width or thickness of the electrode assembly, but by the crosslinking degree of the electrolyte.

According to an embodiment of the present disclosure, a portion showing a crosslinking degree of 80% or more from the outside of the electrode assembly toward the internal core thereof may be taken as a peripheral portion, while a portion surrounded by the peripheral portion and showing a crosslinking degree of less than 80% may be taken as a core portion.

Meanwhile, according to an embodiment of the present disclosure, the vacant space of the battery casing as an external part of the electrode assembly may be filled with the electrolyte. This is also referred to as a filling portion hereinafter. The electrolyte with which the battery casing is filled is gelled and may be formed integrally with and indivisibly from the peripheral portion. The secondary battery according to the present disclosure may be obtained by introducing the electrode assembly to the battery casing, injecting the composition for a gel polymer electrolyte to the battery casing and carrying out gelling, as described hereinafter. As a result, the peripheral portion of the electrode assembly may be connected to and formed integrally with the filling portion.

Meanwhile, according to an embodiment of the present disclosure, the peripheral portion may be extended even to the external part of the electrode assembly and may partially occupy the filling portion. In other words, the core portion may be disposed in the electrode assembly and surrounded by the transition portion, and thus the transition portion may be surrounded by the peripheral portion. As a result, the liquid-state electrolyte may be disposed in such a manner that it may not be in direct contact with the battery casing. FIG. 1 schematically illustrates an embodiment in which the transition portion is extended beyond the outer boundary of the electrode assembly and partially occupies the filling portion.

According to the present disclosure, the positive electrode may include a positive electrode current collector, and a positive electrode active material layer formed on one surface or both surfaces of the positive electrode current collector. The positive electrode active material layer includes a positive electrode mixture, which may include a positive electrode active material, a binder and a conductive material. Herein, the positive electrode mixture does not include an electrolyte with which the positive electrode is wetted. According to the present disclosure, the positive electrode active material layer includes a plurality of pores and has porous properties, wherein the pores are filled with the electrolyte as described above, and the electrolyte may show a low crosslinking degree and have flowability, or may show a high crosslinking degree and is in a solid state having no flowability, depending on which part of the electrode assembly the pores are located.

The positive electrode current collector is not particularly limited, as long as it causes no chemical change in the corresponding battery and has conductivity. Particular examples of the positive electrode current collector may include stainless steel, aluminum, nickel, titanium, baked carbon, aluminum or stainless steel surface-treated with carbon, nickel, titanium or silver, or the like.

The positive electrode active material is a compound capable of reversible lithium intercalation/deintercalation, and particular examples thereof include lithium composite metal oxides containing at least one metal, such as cobalt, manganese, nickel or aluminum, and lithium. More particularly, the lithium composite metal oxides may include lithium-manganese oxides (e.g. $LiMnO_2$, $LiMn_2O_4$, etc.), lithium-cobalt oxides (e.g., $LiCoO_2$, etc.), lithium-nickel oxides (e.g., $LiNiO_2$, etc.), lithium-nickel-manganese oxides (e.g. $LiNi_{1-Y}Mn_YO_2$ (wherein $0 < Y < 1$), $LiMn_{2-z}Ni_zO_4$ (wherein $0 < Z < 2$)), lithium-nickel-cobalt oxides (e.g., $LiNi_{1-Y1}Co_{Y1}O_2$ (wherein $0 < Y1 < 1$)), lithium-manganese-cobalt oxides (e.g., $LiCo_{1-Y2}Mn_{Y2}O_2$ (wherein $0 < Y2 < 1$), $LiMn_{2-z1}Co_{z1}O_4$ (wherein $0 < Z1 < 2$)), lithium-nickel-manganese-cobalt oxides (e.g., $Li(Ni_pCo_qMn_{r1})O_2$ ($0 < p < 1$, $0 < q < 1$, $0 < r1 < 1$, $p + q + r1 = 1$) or $Li(Ni_{p1}Co_{q1}Mn_{r2})O_4$ ($0 < p1 < 2$, $0 < q1 < 2$, $0 < r2 < 2$, $p1 + q1 + r2 = 2$)), lithium-nickel-cobalt-transition metal (M) oxides (e.g., $Li(Ni_{p2}Co_{q2}Mn_{r3}MS_2)O_2$ (wherein M is selected from the group consisting of Al, Fe, V, Cr, Ti, Ta, Mg and Mo, and each of p2, q2, r3 and s2 represents the atomic proportion of each element satisfying $0 < p2 < 1$, $0 < q2 < 1$, $0 < r3 < 1$, $0 < s2 < 1$, and $p2 + q2 + r3 + s2 = 1$)), or the like, and any one compound, or two or more compounds of them may be used.

Particularly, the lithium composite metal oxides may include $LiCoO_2$, $LiMnO_2$, $LiNiO_2$, lithium nickel manganese cobalt oxides (e.g. $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, or the like), or lithium nickel cobalt aluminum oxides (e.g., $Li(Ni_{0.8}Co_{0.15}Al_{0.05})O_2$, or the like) with a view to improvement of the capacity characteristics and stability of a battery.

The positive electrode active material may be used in an amount of 50-99 wt% based on 100 wt% of the positive electrode mixture.

The binder is an ingredient which assists binding between the active material and the conductive material and binding to the current collector. In general, the binder may be added in an amount of 1-30 wt% based on the 100 wt% of the positive electrode mixture. Particular examples of the binder include polyvinylidene fluoride (PVDF), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene-butadiene rubber, fluoro-rubber, various copolymers, or the like.

The conductive material may be added in an amount of 0.5-30 wt%, such as 1-30 wt%, based on the total weight of the solid content in the positive electrode mixture.

Such a conductive material is not particularly limited, as long as it causes no chemical change in the corresponding battery and has conductivity. Particular examples of the conductive material include: carbon powder, such as carbon black, acetylene black (or denka black), ketjen black, channel black, furnace black, lamp black or thermal black; graphite powder, such as natural graphite, artificial graphite or graphite having a well-developed crystal structure; conductive fibers, such as carbon fibers or metallic fibers; carbon fluoride; metal powder, such as, aluminum or nickel powder; conductive whisker, such as zinc oxide or potassium titanate; conductive metal oxide, such as titanium oxide; and conductive materials, such as polyphenylene derivatives.

According to the present disclosure, the negative electrode may include a negative electrode current collector, and a negative electrode active material layer formed on one surface or both surfaces of the negative electrode current collector. The negative electrode active material layer includes a negative electrode mixture, which may include a negative electrode active material, a binder and a conductive material. Herein, the negative electrode mixture does not include an electrolyte with which the negative electrode is wetted. According to the present disclosure, the negative electrode active material layer includes a plurality of pores and has porous properties, wherein the pores are filled with the electrolyte as described above, and the electrolyte may show a low crosslinking degree and have flowability, or may show a high crosslinking degree and is in a solid state having no flowability, depending on which part of the electrode assembly the pores are located.

The negative electrode current collector generally has a thickness of 3-500 $\mu$m. The negative electrode current collector is not particularly limited, as long as it has high conductivity, while not causing any chemical change in the corresponding battery. Particular examples of the negative electrode current collector include copper, stainless steel, aluminum, nickel, titanium, baked carbon, or copper or stainless steel surface-treated with carbon, nickel, titanium, silver, etc., aluminum-cadmium alloy, or the like. In addition, similarly to the positive electrode current collector, the negative electrode current collector may have fine surface irregularities formed on the surface thereof to increase the adhesion of a negative electrode active material, and may have various shapes, such as a film, a sheet, a foil, a net, a porous body, a foam or non-woven web body, or the like.

In addition, the negative electrode active material may include at least one selected from the group consisting of a carbonaceous material capable of reversible lithium-ion intercalation/deintercalation, a metal or alloy of metal with lithium, a metal composite oxide, a material capable of lithium doping/dedoping, and a transition metal oxide.

The carbonaceous material capable of reversible lithium-ion intercalation/deintercalation may include any carbonaceous negative electrode active material used currently in a lithium-ion secondary battery with no particular limitation. Typical examples of the carbonaceous material include crystalline carbon, amorphous carbon or a combination thereof. Particular examples of the crystalline carbon include graphite, such as amorphous, sheet-like, flake-like, spherical or fibrous natural graphite or artificial graphite, and particular examples of the amorphous carbon include soft carbon (low-temperature baked carbon) or hard carbon, mesophase pitch carbide, baked cokes, or the like.

The metal composite oxide that may be used is selected from the group consisting of $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), and $Sn_xMe_{1-x}Me'_yO_z$ (wherein Me is Mn, Fe, Pb, Ge; Me' is Al, B, P, Si, element of Group 1, 2 or 3 in the Periodic Table, halogen; and $0 < x \leq 1$; $1 \leq y \leq 3$; and $1 \leq z \leq 8$).

The material capable of lithium doping/dedoping may include Si, $SiO_x$($0 < x \leq 2$), Si-Y alloy (wherein Y is an element selected from the group consisting of alkali metals, alkaline earth metals, Group 13 elements, Group 14 elements, transition metals, rare earth metal elements and combinations thereof, except Si), Sn, $SnO_2$, Sn-Y (wherein Y is an element selected from the group consisting of alkali metals, alkaline earth metals, Group 13 elements, Group 14 elements, transition metals, rare earth metal elements and combinations thereof, except Sn), or the like. At least one of such materials may be used in combination with $SiO_2$. Element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include lithium-containing titanium composite oxide (LTO), vanadium oxide, lithium vanadium oxide, or the like.

The negative electrode material may be used in an amount of 50~99 wt%, based on 100 wt % of the negative electrode mixture.

The binder is an ingredient which assists binding among the conductive material, active material and the current collector. In general, the binder may be added in an amount of 1-30 wt%, based on 100 we% of the negative electrode mixture. Particular examples of the binder include polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer (EPDM), sulfonated EPDM, styrene-butadiene rubber, fluoro-rubber, various copolymers thereof, or the like.

The conductive material is an ingredient for further improving the conductivity of the negative electrode active material, and may be added in an amount of 0.5-30 wt%, such as 1-20 wt%, based on 100 wt% of the negative electrode mixture. The conductive material may be the same or different as the conductive material used for manufacturing the positive electrode. Particular examples of the conductive material include: carbon powder, such as carbon black, acetylene black (or denka black), ketjen black, channel black, furnace black, lamp black or thermal black; graphite powder, such as natural graphite, artificial graphite or graphite having a well-developed crystal structure; conductive fibers, such as carbon fibers or metallic fibers; carbon fluoride; metal powder, such as aluminum or nickel powder; conductive whisker, such as zinc oxide or potassium titanate; conductive metal oxide, such as titanium oxide; and conductive materials, such as polyphenylene derivatives.

The separator functions to interrupt an internal short-circuit between both electrodes and to allow wetting with an electrolyte, and may include an insulating porous sheet, such as a polymer film, a polymer non-woven web, or the like. For example, the separator may be prepared by mixing a polymer resin, a filler and a solvent to form a separator composition and coating the separator composition directly on the top of an electrode, followed by drying, to form a separator film. In a variant, the separator may be prepared by casting the separator composition on a support, followed by drying, and laminating the separator film separated from the support on the top of an electrode.

The separator may include a conventional porous polymer film, such as a porous polymer film made of a polyolefin-based polymer, including ethylene homopolymer, propylene homopolymer, ethylene/butene copolymer, ethylene/hexene copolymer or ethylene/methacrylate copolymer, and such porous polymer films may be used alone or in the form of a laminate. Otherwise, a conventional porous non-woven web, such as a polymeric non-woven web made of high-melting point glass fibers, polyethylene terephthalate fibers, or the like, may be used with no particular limitation.

Herein, the porous separator may generally have a pore diameter of 0.01-50 $\mu$m and a porosity of 5-95%. In addition, the porous separator may generally have a thickness of 5-300 $\mu$m.

According to the present disclosure, the separator includes a plurality of pores and has porous properties, wherein the pores are filled with the electrolyte as described above, and the electrolyte may show a low crosslinking degree and have flowability, or may show a high crosslinking degree and is in a solid state having no flowability, depending on which part of the electrode assembly the pores are located.

Meanwhile, according to an embodiment of the present disclosure, the separator may include an organic/inorganic composite porous coating layer on the surface thereof, wherein the composite porous coating layer includes inorganic particles and a binder resin ingredient. The inorganic particles may have a particle diameter of 0.01-2 $\mu$m and are not particularly limited, as long as they undergo no oxidation and/or reduction at an electric potential where a battery is operated and thus are electrochemically stable. Particular examples of the inorganic particles may include at least one selected from the group consisting of $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, NiO, CaO, ZnO, $ZrO_2$, $Y_2O_3$, $Al_2O_3$, SiC, $TiO_2$, boehmite, aluminum oxide and aluminum hydroxide. Meanwhile, there is no particular limitation in the material or shape of the battery casing. For example, the battery casing may have a cylindrical or prismatic shape using a metal can. In a variant, the battery casing may have a pouch-like shape using a pouch film or a coin-like shape.

**Method for Manufacturing Secondary Battery**

Hereinafter, the method for manufacturing a secondary battery according to an embodiment of the present disclosure will be explained.

According to an embodiment of the present disclosure, the method for manufacturing a secondary battery includes the steps of:

(S10) introducing an electrode assembly to a battery;
(S20) injecting a composition for forming a gel polymer electrolyte into the battery casing;
(S30) primarily sealing the battery casing under the condition of ambient pressure (under the atmosphere);
(S40) releasing the primary sealing and carrying out degassing; and
(S50) subjecting the resultant product of step (S40) to crosslinking.

First, an electrode assembly is prepared, and then is introduced to a battery casing (S10).

The electrode assembly is the same as described with reference to the secondary battery according to the present disclosure. Therefore, for convenience of explanation, description of the electrode assembly is abbreviated. According to an embodiment of the present disclosure, the electrode assembly may be prepared in a jelly-roll shape through winding, or in a stacked or stacked-folded shape, depending on the particular purpose of use or application of the battery.

Next, a composition for a gel polymer electrolyte is injected into the battery casing in which the electrode assembly is received (S20).

According to an embodiment of the present disclosure, the composition for a gel polymer electrolyte may include (a) a lithium salt, (b) a non-aqueous organic solvent, (c) a polymerization initiator, and (d) at least one polymerizable compound selected from the group consisting of a polymerizable monomer, oligomer and copolymer.

**Lithium Salt**

The lithium salt is used as an electrolyte salt in the lithium secondary battery and as a medium for transporting ions. In general, the lithium salt includes $Li^+$, as a cation, and at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$; $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $CF_3(CF_2)_7SO_3^-$, $CF_3CO_2^-$, $CH_3CO_2^-$, $SCN^-$ and $(CF_3CF_2SO_2)_2N^-$, as an anion.

Such lithium salts may be used alone or in combination. The lithium salt may be used in an amount controlled suitably within a generally applicable range. However, the lithium salt may be used at a concentration of 0.5-2 M, particularly 0.9-1.5 M, in the electrolyte in order to obtain an optimized effect of forming a coating film for preventing corrosion on the electrode surface.

Since the composition for a gel polymer electrolyte according to the present disclosure includes a lithium salt at 0.5 M or more, it is possible to reduce the resistance caused by depletion of lithium ions during high-rate charge/discharge. Furthermore, when the concentration of the electrolyte salt in the composition for a gel polymer electrolyte according to the present disclosure satisfies the above-defined range, it is possible to ensure high lithium cation ($Li^+$) ion transportability (i.e. cation transference number) by virtue of an increase in lithium cations present in the composition for a gel polymer electrolyte, and to accomplish an effect of reducing diffusion resistance of lithium ions, thereby realizing an effect of improving cycle capacity characteristics.

**Non-Aqueous Organic Solvent**

The non-aqueous organic solvent is not particularly limited, as long as it causes minimized decomposition caused by oxidation during the charge/discharge cycles of a secondary battery and can realize desired properties in combination with additives. For example, carbonate-based organic solvents, ether-based organic solvents and ester-based organic solvents may be used alone or in combination.

Among such organic solvent, the carbonate-based organic solvent may include at least one of cyclic carbonate-based organic solvents and linear carbonate-based organic solvents. Particular examples of the cyclic carbonate-based organic solvent may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate and fluoroethylene carbonate (FEC). Particularly, the cyclic carbonate-based organic solvent may include a mixed solvent of ethylene carbonate having a high dielectric constant with propylene carbonate having a relatively lower melting point as compared to ethylene carbonate.

In addition, the linear carbonate-based organic solvent is an organic solvent having low viscosity and a low dielectric constant, and typical examples thereof may include at least one organic solvent selected from the group consisting of dimethyl carbonate (DMC), diethyl carbonate (DEC), dipropyl carbonate, ethyl methyl carbonate (EMC), methyl propyl carbonate and ethyl propyl carbonate. Particularly, the linear carbonate-based organic solvent may include dimethyl carbonate.

The ether-based organic solvent may include any one selected from the group consisting of dimethyl ether, diethyl ether, dipropyl ether, methyl ethyl ether, methyl propyl ether and ethyl propyl ether, or a mixture of two or more of them. However, the scope of the present disclosure is not limited thereto.

The ester-based organic solvent may include at least one selected from the group consisting of linear ester-based organic solvents and cyclic ester-based organic solvents.

Particular examples of the linear ester-based organic solvent may include any one organic solvent selected from the group consisting of methyl acetate, ethyl acetate, propyl acetate, methyl propionate, ethyl propionate, propyl propionate and butyl propionate, or a mixture of two or more of them. However, the scope of the present disclosure is not limited thereto.

Particular examples of the cyclic ester-based organic solvent may include any one organic solvent selected from the group consisting of γ-butyrolactone, γ-valerolactone, γ-caprolactone, σ-valerolactone and ε-caprolactone, or a mixture of two or more of them. However, the scope of the present disclosure is not limited thereto.

Among such ester-based solvents, the cyclic carbonate-based compound is a high-viscosity organic solvent and can dissociate the lithium salt in the electrolyte well, and thus may be used preferably. When using such a cyclic carbonate-based compound in the form of a mixture with a low-viscosity and low-dielectric linear carbonate-based compound and linear ester-based compound at a suitable mixing ratio, it is possible to prepare a gel polymer electrolyte having high electrical conductivity preferably.

**Polymerization Initiator**

The polymerization initiator may include a conventional thermal polymerization initiator or photopolymerization initiator known to those skilled in the art. For example, the polymerization initiator may be decomposed by heat to form radicals and react with the crosslinking agent through free radical polymerization to form a gel polymer electrolyte.

More particularly, non-limiting examples of the polymerization initiator include, but are not limited to: organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide, at least one azo compound selected from the group consisting of 2,2'-azobis(2-cyanobutane), 2,2'-azobis(methylbutyronitrile), 2,2'-azobis(isobutyronitrile) (AIBN) and 2,2'-azobisdimethyl valeronitrile (AMVN), or the like.

The polymerization initiator is decomposed by heat (30-100°C) or at room temperature (5-30°C) in a battery to form radicals, and a polymerizable oligomer reacts with an acrylate compound through free radical polymerization to form a gel polymer electrolyte.

The polymerization initiator may be used in an amount of 0.01-20 parts by weight, particularly 0.1-10 parts by weight, based on 100 parts by weight of the polymerizable compound.

When the polymerization initiator is used with a range of 0.01-20 parts by weight, it is possible to increase the conversion into a gel polymer so that gel polymer electrolyte properties may be ensured, and to prevent a pre-gellation reaction so that the wettability of an electrode with an electrolyte may be improved.

**Polymerizable Compound**

The polymerizable compound, i.e. polymerizable monomer, oligomer or copolymer, is a compound which has a polymerizable functional group selected from the group consisting of vinyl, epoxy, allyl and (meth)acryl groups and capable of undergoing polymerization in its structure, and can be converted into a gel phase through polymerization or crosslinking. The polymerizable compound is not particularly limited, as long as it is used conventionally as a monomer, oligomer or copolymer for preparing a gel polymer electrolyte.

Particularly, non-limiting examples of the polymerizable monomer include, but are not limited to: tetraethylene glycoldiacrylate, polyethylene glycol diacrylate (molecular weight 50-20,000), 1,4-butanediol diacrylate, 1,6-hexanediol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in combination.

In addition, typical examples of the copolymer include at least one selected from the group consisting of allyl 1,1,2,2-tetrafluoroethyl ether (TFE)-co-(2,2,2-trifluoroethyl acrylate), TFE-co-vinyl acetate, TFE-co-(2-vinyl-1,3-dioxolane), TFE-co-vinyl methacrylate, TFE-co-acrylonitrile, TFE-co-vinyl acrylate, TFE-co-methyl acrylate, TFE-co-methyl methacrylate (MMA) and TFE-co-2,2,2-trifluoroethyl acrylate (FA).

The polymerizable compound may be used in an amount of 0.01-10 wt% based on the total weight of the composition for a gel polymer electrolyte. When the content of the polymerizable compound is larger than 10 wt%, gelling may occur in an excessively early time, while injecting the composition for a gel polymer electrolyte to a battery, or the composition may become excessively dense to provide a gel having high resistance. On the contrary, when the content of the polymerizable compound is smaller than 0.01 wt%, gelling occurs hardly.

**Additives**

In addition, the composition for a gel polymer electrolyte according to the present disclosure may further include supplementary additives capable of forming a more stable ion conductive coating film on the surface of an electrode, if necessary, in order to prevent decomposition of the non-aqueous electrolyte and a collapse of the negative electrode under a high-output environment, or to improve low-temperature high-rate discharge characteristics, high-temperature stability, overcharge-preventing effect, battery swelling-inhibiting effect at high temperature, or the like.

Particularly, typical examples of such supplementary additives may include at least one additive selected from the group consisting of sultone-based compounds, sulfite-based compounds, sulfone-based compounds, sulfate-based compounds, halogen-substituted carbonate-based compounds, nitrile-based compounds, cyclic carbonate-based compounds, phosphate-based compounds, borate-based compounds and lithium salt-based compounds.

The sultone-based compounds may include at least one compound selected from the group consisting of 1,3-propane sultone (PS), 1,4-butane sulfone, ethene sultone, 1,3-propene sultone (PRS), 1,4-butene sultone and 1-methyl-1,3-propene sultone, and may be used in an amount of 0.3-5 wt%, particularly 1-5 wt%, based on the total weight of the composition for a gel polymer electrolyte. When the content of the sultone-based compounds is larger than 5 wt% in the composition for a gel polymer electrolyte, an excessively thick coating film may be formed on the surface of an electrode, resulting in an increase in resistance and degradation of output. Also, in this case, resistance may be increased due to such an excessive amount of additives in the composition for a gel polymer electrolyte to cause degradation of output characteristics.

The sulfite-based compounds may include at least one compound selected from the group consisting of ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite and 1,3-butylene glycol sulfite, and may be used in an amount of 3 wt% or less, based on the total weight of the composition for a gel polymer electrolyte.

The sulfone-based compounds may include at least one compound selected from the group consisting of divinyl sulfone, dimethyl sulfone, diethyl sulfone, methyl ethyl sulfone and methyl vinyl sulfone, and may be used in an amount of 3 wt% or less, based on the total weight of the composition for a gel polymer electrolyte.

The sulfate-based compounds may include ethylene sulfate (Esa), trimethylene sulfate (TMS), or methyl trimethylene sulfate (MTMS), and may be used in an amount of 3 wt% or less, based on the total weight of the composition for a gel polymer electrolyte.

In addition, the halogen-substituted carbonate-based compounds may include fluoroethylene carbonate (FEC), and may be used in an amount of 5 wt% or less, based on the total weight of the composition for a gel polymer electrolyte. When the content of the halogen-substituted carbonate-based compounds is larger than 5 wt%, cell swelling quality may be degraded.

Further, the nitrile-based compounds may include at least one compound selected from the group consisting of succinonitrile, adiponitrile (Adn), acetonitrile, propionitrile, butyronitrile, veleronitrile, caprylonitrile, heptane nitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

The cyclic carbonate-based compounds may include vinylene carbonate (VC) or vinylethylene carbonate, and may be used in an amount of 3 wt% or less, based on the total weight of the composition for a gel polymer electrolyte. When the content of the cyclic carbonate-based compounds is larger than 3 wt%, cell swelling quality may be degraded.

The phosphate-based compounds may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl) phosphate and tris(trifluoroethyl) phosphite, and may be used in an amount of 3 wt% or less, based on the total weight of the composition for a gel polymer electrolyte.

The borate-based compounds may include lithium oxalyl difluoroborate, and may be used in an amount of 3 wt% or less, based on the total weight of the composition for a gel polymer electrolyte.

The lithium salt-based compounds may include compounds different from the lithium salt contained in the non-aqueous electrolyte, and particularly, at least one compound selected from the group consisting of $LiPO_2F_2$, LiODFB, LiBOB (lithium bisoxalatoborate ($LiB(C_2O_4)_2$) and $LiBF_4$, and may be used in an amount of 3 wt% or less, based on the total weight of the composition for a gel polymer electrolyte.

Further, two or more of the supplementary additives may be used in combination, and the content of the supplementary additives may be 20 wt% or less, particularly 0.1-10 wt%, based on the total weight of the composition for a gel polymer electrolyte. When the content of the supplementary additives is smaller than 0.1 wt%, it is not possible to obtain sufficient effects of improving the low-temperature output, high-temperature storage characteristics and high-temperature life characteristics of a battery. When the content of the supplementary additives is larger than 20 wt%, excessive side reactions may occur in the composition for a gel polymer electrolyte during the charge/discharge of a battery due to an excessive amount of additives. Particularly, when the additives are added in an excessive amount, they cannot be decomposed sufficiently at high temperature, resulting in formation of unreacted materials or precipitate in the electrolyte at room temperature. In this case, side-reactions may occur to cause degradation of the life or resistance characteristics of a secondary battery.

Then, the battery casing is primarily sealed under the atmosphere and aging is carried out (S30). The sealing may be carried out to such a level that the electrolyte may not be leaked to the outside of the battery casing during the aging step as described hereinafter. When the battery casing is sealed under the atmosphere, it is sealed with the air remaining inside of the battery, wherein the air may include about 21 vol% of oxygen. Meanwhile, according to an embodiment of the present disclosure, a step of further injecting oxygen into the battery casing may be carried out in order to increase the oxygen concentration in the battery casing to a level higher than the oxygen concentration in the air, i.e. higher than 21 vol%. Meanwhile, when carrying out the primary sealing, the pressure range is not particularly limited. For example, the primary sealing may be carried out under atmospheric pressure.

After the primary sealing, an aging step may be carried out. The electrode assembly may be wetted sufficiently with the composition through the aging step, and thus the whole of the electrode assembly may be wetted uniformly with the composition. In addition, since the battery is retained stably at a predetermined position during the aging step, oxygen concentration may become uniform throughout the electrode assembly. The aging step may be carried out within several hours to several days, but is not limited thereto. For example, the aging step may be carried out within 72 hours. Meanwhile, a high temperature (60°C or higher) may be applied to a conventional liquid electrolyte in order to increase the aging effect. However, in the case of a gel polymer electrolyte, the aging step may be carried out preferably at a temperature ranging from room temperature to 45°C considering a possibility of pre-gellation.

Meanwhile, oxygen ($O_2$) can inhibit the chain reaction of monomers through radical quenching, when radicals are generated. Therefore, when the aging step is carried out in the presence of oxygen, polymerization through radical reaction may be inhibited in the aging step, and thus the composition is not gelled but is retained in the state of a liquid composition. As a result, the whole of the electrode assembly may be wetted uniformly with the composition. FIG. 2 is a schematic view illustrating uniform distribution of oxygen 300 in the primarily sealed battery.

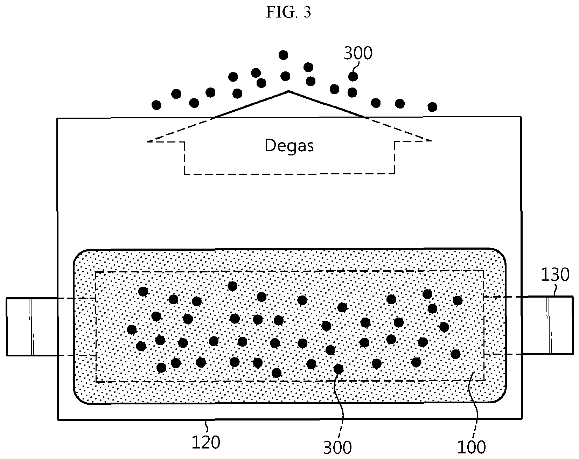

After that, a gradient of oxygen concentration is generated in the peripheral portion and the core portion of the electrode assembly (S40). Step (S40) is intended to make the oxygen concentration in the core portion of the electrode assembly higher than the oxygen concentration of the peripheral portion. According to an embodiment of the present disclosure, step (S40) may be carried out by reopening the secondary battery as a product obtained from step (S30) and carrying out degassing. For example, the secondary battery may be opened by cutting the dotted line (A) portion in FIG. 2. FIG. 3 illustrates the gradient of oxygen concentration generated by such degassing.

According to an embodiment of the present disclosure, the degassing may be carried out within such a range that the battery volume may be maintained at 75-90% based on 100% of the battery volume before releasing the sealing. In general, degassing is carried out to 70% or less based on 100% of the volume of a battery before releasing the sealing in order to remove the gases generated during an aging step to the highest degree. On the other hand, according to the present disclosure, degassing is carried out under the condition satisfying the above-defined range in order to maintain a predetermine level of oxygen concentration in the battery. Meanwhile, according to an embodiment of the present disclosure, the battery volume refers to the total volume of a space surrounded by a casing material, not excluding the vacant space inside of the battery surrounded by the casing material.

According to an embodiment of the present disclosure, the battery after degassing may have a volume larger than the battery volume right after the primary sealing (before carrying out the aging, i.e. before generation of gases).

According to an embodiment of the present disclosure, the battery volume before releasing the sealing may vary from one battery to another battery depending on the amount of gases generated during the aging. For example, gas generation may depend on the type of an electrolyte, types of additives in the electrolyte, types of battery materials, such as electrode active materials, aging time, aging temperature, or the like. However, instead of calculation and application of the quantitative gas generation and gas removal, degassing is carried out within the above-defined range in order to allow oxygen to be left in the battery not by totally removing the gases generated during the aging step but by allowing a predetermined amount of oxygen to remain in the battery. After the degassing step, oxygen remains partially in the core portion, while the peripheral portion having a relatively shorter length of path communicating with the outside and allowing easy discharge of gases shows higher degassing efficiency. In this manner, the core portion can maintain a low crosslinking degree and the peripheral portion can maintain a higher crosslinking degree as compared to the core portion through the subsequent crosslinking step.

According to an embodiment of the present disclosure, in the case of mass production of batteries, the amount of gas generation and a change in volume caused by gas emission may be predetermined before mass production, when aging the designed batteries. In this manner, it is possible to control the process in such a manner that degassing may be performed within the above-defined range of a change in volume.

Meanwhile, according to an embodiment of the present disclosure, at least the degassing step, or the opening and degassing steps, may be carried out under the atmosphere of a gas having a lower oxygen concentration as compared to the air. For example, the step(s) may be carried out under the atmosphere of a gas having an oxygen concentration of less than 20 vol%, under the atmosphere of 90 vol% or more of nitrogen ($N_2$), or under the atmosphere of 90 vol% or more of an inert gas, such as helium, neon, argon, krypton, xenon, or the like. According to an embodiment of the present disclosure, when the opening and degassing steps, or at least the degassing step, is carried out under the above-mentioned gaseous atmosphere, the crosslinking in the peripheral portion may not be interrupted by oxygen emitted from the inner part of the electrode assembly to the outside. Therefore, it is possible to obtain a battery wherein the crosslinking degree of the core portion is relatively lower, and the crosslinking degree of the peripheral portion is relatively higher.

According to an embodiment of the present disclosure, the battery casing may be sealed again (secondary sealing), after carrying out the degassing step and before carrying out the subsequent crosslinking step. According to an embodiment of the present disclosure, as described above, the secondary sealing step may be carried out under the atmosphere of a gas having an oxygen concentration of less than 20 vol%, under the atmosphere of 90 vol% or more of nitrogen ($N_2$), or under the atmosphere of 90 vol% or more of an inert gas, such as helium, neon, argon, krypton, xenon, or the like.

Then, heat is applied to the battery to carry out crosslinking (S50). The crosslinking may be carried out by disposing and hating the battery in a heating device. While heat applied from the outside of the battery is conducted sequentially to the inside of the battery, the electrolyte composition starts to be gelled continuously from the outside to the inside of the battery. However, the battery has a gradient of oxygen concentration at the inner part/outer part thereof, and thus gelation occurs smoothly at the outer part of the battery as compared to the inner part thereof, but the inner part of the battery having a relatively higher oxygen concentration is inhibited from chain reaction of polymer monomers, i.e. gelation, through the radical quenching function of oxygen. In other words, the electrolyte in the core portion of the battery is not gelled but is maintained in a liquid phase to provide a relatively lower crosslinking degree, while the peripheral portion surrounding the core portion is crosslinked to a predetermined crosslinking degree or higher to form a gel polymer electrolyte.

According to an embodiment of the present disclosure, the crosslinking may be carried out at a temperature of 60°C or higher, preferably 60-75°C. When the crosslinking temperature is lower than 60°C, crosslinking cannot be initiated. On the other hand, when the crosslinking temperature is higher than 75°C, electrolyte additives may be decomposed.

Meanwhile, according to an embodiment of the present disclosure, the heating device may be preheated to a predetermined temperature, before the battery is introduced thereto. In this case, heat is conducted rapidly to the peripheral portion of the battery, thereby accelerating the gelation in the peripheral portion.

As described above, in the method for manufacturing a secondary battery according to the present disclosure, a gradient of oxygen concentration is formed from the outer part to the inner part of the secondary battery in such a manner that crosslinking may be performed sufficiently in the peripheral portion having a lower oxygen concentration, and crosslinking may be inhibited in the core portion having a higher oxygen concentration, and thus the core portion maybe maintained in a flowable state inside of the battery due to a low crosslinking degree of the electrolyte. In other words, the method according to the present disclosure uses a different crosslinking degree of a gel composition by using a difference in oxygen concentration between the core portion of the battery and the peripheral portion of the battery. As a result, the battery core portion is enriched with a liquid electrolyte, and the battery peripheral portion is enriched with a gel electrolyte. In this manner, it is possible to improve the durability and safety of the battery at the same time.

In the method for manufacturing a lithium secondary battery according to the present disclosure, the crosslinking in step (S50) may be carried out at 60-75°C for 5-24 hours. For example, steps (S50) may be carried out at about 70°C for about 5 hours.

According to an embodiment of the present disclosure, an activation step may be further carried out once, or twice or more times, after step (S50). In addition, after carrying out the activation step, a degassing step of removing the gases generated in the battery may be further carried out. When multiple activation steps are carried out, a degassing step may be carried out after the completion of the total activation steps, or between one activation step and another activation step.

Meanwhile, the battery activation step may be carried out in a known manner. For example, the battery may be subjected to charge/discharge at least once. According to an embodiment of the present disclosure, the activation step may include charging the battery at 0.2 C-rate to SOC 60% or more. Meanwhile, the additional degassing step may be carried out by pressurizing the battery under a pressure of -85 kPa to -95 kPa Vs. atmospheric pressure, or under the condition of a reduced pressure of -90 kPa to -95 kPa, for several seconds to several minutes to remove the gases remaining in the battery casing. For example, the additional degassing step may be carried out for about 10 seconds.

As described above, the secondary battery obtained from the method for manufacturing a secondary battery according to the present disclosure includes an electrolyte having a lower crosslinking degree in the core portion thereof, and the core portion may be encapsulated with the peripheral portion including a gel electrolyte crosslinked to a predetermined crosslinking degree or higher.

According to the present disclosure, the secondary battery may be a lithium secondary battery, preferably. Non-limiting examples of the lithium secondary battery include a lithium metal secondary battery, a lithium-ion secondary battery, a lithium polymer secondary battery, a lithium-ion polymer secondary battery, or the like.

## MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### (1) Examples 1 and 2

### (Manufacture of Electrode Assembly)

First, 94 wt% of $LiNi_{1/3}Co_{1/3}Mn_{1/3}O_2$ (NCM) as a positive electrode active material, 3 wt% of carbon black as a conductive material and 3 wt% of polyvinylidene fluoride (PVDF) as a binder were added to N-methyl-2-pyrrolidone (NMP) as a solvent to obtain a positive electrode active material slurry (solid content: 50 wt%). The positive electrode active material slurry was applied to and dried on aluminum (Al) foil having a thickness of about 20 $\mu$m as a positive electrode current collector, followed by roll pressing, to obtain a positive electrode.

In addition, 96 wt% of carbon powder (mixture of 90 wt% of artificial graphite with 10 wt% of natural graphite) as a negative electrode active material, 3 wt% of PVDF as a binder and 1 wt% of carbon black as a conductive material were added to NMP as a solvent to obtain a negative electrode active material slurry (solid content: 80 wt%). The negative electrode active material slurry was applied to and dried on copper (Cu) foil having a thickness of 10 $\mu$m as a negative electrode current collector, followed by roll pressing, to obtain a negative electrode.

The positive electrode, the negative electrode and a separator including three layers of polypropylene/polyethylene/polypropylene (PP/PE/PP) were stacked alternately and successively to obtain a stacked electrode assembly including 20 sheets of positive electrodes.

**(Preparation of Composition for Gel Polymer Electrolyte)**

First, $LiPF_6$ was dissolved in a non-aqueous organic solvent having a composition of ethylene carbonate (EC):ethyl methyl carbonate (EMC) = 30:70 (volume ratio) to 1.0 M, thereby preparing 96.96 g of a non-aqueous electrolyte. Next, 5 wt% of trimethylolpropane triacrylate as a polymerizable compound and 0.02 wt% of AIBN as a polymerization initiator, based on 100 wt% of the composition for a gel polymer electrolyte, were added to the non-aqueous electrolyte to prepare a composition for a gel polymer electrolyte.

**(Manufacture of Lithium Secondary Battery)**

The electrode assembly was inserted into a pouch-type battery casing, and the composition for a gel polymer electrolyte was injected thereto. Next, the battery casing was sealed under ambient pressure. The sealing was carried out by pressurizing the sealing portion of the pouch at 140°C for 2 seconds. After the battery casing was sealed, it was allowed to stand at room temperature for 3 days. Then, the battery casing was opened, subjected to degassing (primary degassing) and sealed again. Finally, the battery was disposed in a heating chamber and heated at 70°C for 5 hours to obtain a lithium secondary battery including a thermally polymerized gel polymer electrolyte. The primary degassing conditions (pressure during pressurization and pressurization time) are shown in the following Table 1.

Meanwhile, after the primary degassing step, the battery was charged at 0.2 C to SOC 60%, and the battery casing was opened and subjected to degassing (additional degassing) under the condition of a reduced pressure of -95 kPa for 10 seconds.

**(2) Example 3**

An electrode assembly and a composition for a gel polymer electrolyte were prepared in the same manner as Examples 1 and 2.

The electrode assembly was inserted into a pouch-type battery casing, and the composition for a gel polymer electrolyte was injected thereto. Next, the battery casing was sealed under ambient pressure. The sealing was carried out by pressurizing the sealing portion of the pouch at 140°C for 2 seconds. After the battery casing was sealed, it was allowed to stand at room temperature for 3 days. Then, the battery casing was opened under helium atmosphere and subjected to degassing (primary degassing). After that, the battery casing was sealed again. Finally, the battery was disposed in a heating chamber and heated at 70°C for 5 hours to obtain a lithium secondary battery including a thermally polymerized gel polymer electrolyte. The primary degassing conditions (pressure during pressurization and pressurization time) are shown in the following Table 1.

Meanwhile, after the primary degassing step, the battery was charged at 0.2 C to SOC 60%, and the battery casing was opened and subjected to degassing (additional degassing) under the condition of a reduced pressure of -95 kPa for 10 seconds.

**(3) Comparative Example 1**

A battery was obtained in the same manner as Example 1, except that the pressure during pressurization was set to 95 kPa and the pressurization time was set to 30 minutes.

**(4) Comparative Example 2**

A battery was obtained in the same manner as Example 1, except that the primary degassing step was not carried out.

[Table 1]

| | Comp. Ex. 1 | Comp. Ex. 2 | Ex. 1 | Ex. 2 | Ex. 3 |
|---|---|---|---|---|---|
| Primary degassing time | 30 | X | 10 | 30 | 30 |
| Primary degassing pressure (kPa) | 95 | X | 95 | 85 | 85 |
| Battery volume after primary degassing (Vs. 100% of battery volume before degassing) | 68 | 100 | 82 | 85 | 84 |
| Crosslinking degree of inner part of cell (%) | 98 | 65 | 75 | 79 | 78 |
| Crosslinking degree of outer part of cell (%) | 100 | 83 | 97 | 95 | 98 |

[Table 2]

| | Comp. Ex. 1 | Comp. Ex. 2 | Ex. 1 | Ex. 2 | Ex. 3 |
|---|---|---|---|---|---|
| Resistance (mOhm) | 4.5 | 3.4 | 3.7 | 3.9 | 4.0 |
| Life (%, 100 cycle) | 94.3 | 99.2 | 97.7 | 97.1 | 96.4 |
| Cell stiffness (%) | 100 | 70.3 | 94.8 | 91.3 | 94.3 |
| Nail (Pass/Total) | 3/3 | 0/3 | 3/3 | 3/3 | 3/3 |
| ** Stiffness: a value expressed by taking the cell stiffness of Comparative Example 1 as 100%, and measured actually in the unit of gf/mm | | | | | |

## (5) Test Examples

### 5-1) Test Example 1: Method for Determining Crosslinking Degree

The crosslinking degree of each of the lithium secondary batteries according to Examples 1-3 and Comparative Examples 1 and 2 was determined as follows.

After the battery casing of each battery was opened, and the electrode assembly was obtained and disintegrated into the peripheral portion and the core portion to provide samples. Then, each sample was introduced to acetone d-6, shaken at room temperature for about 1 hour, and filtered to remove the solid content and to obtain a filtrate. The filtrate was analyzed through NMR to determine the residual amount of the unreacted polymerizable compound from the data of carbon-carbon double bonds, and the residual amount was compared with the amount of the electrolyte sample. Then, the crosslinking degree was calculated according to the following Mathematical Formula 1.

[Mathematical Formula 1]

$$\text{Crosslinking degree (\%)} = 100 - (\text{Amount of unreacted polymerizable compound} / \text{Amount of electrolyte sample}) \times 100$$

Herein, NMR was carried out by the method of one dimensional normal nuclear magnetic resonance spectroscopy (1D Normal NMR). Particularly, Burker 700 MHz NMR analyzer was used to carry out the NMR analysis, and the sample was used after being dissolved in acetone-$d_6$. The NMR analysis was carried out under the conditions of $^1$H NMR (zg 30), ns = 32 and d1 = 3 sec. In addition, the peak of ethylene carbonate (EC) having the lowest volatility in $^1$H NMR spectrum was taken as 100, and the integral of the acrylate double bond peak of each sample was calculated. Then, the relative area value was calculated with the acrylate double bond area of a reference sample taken as 100. The results are shown in the above Table 1.

**5-2) Test Example 2: Method for Determining and Calculating Stiffness of Lithium Secondary Battery**

The stiffness of the lithium secondary battery according to Comparative Example 1 was determined for its core portion by using an instrument of Texture analyzer Ball type at a speed of 10 mm/min in a distance of 1.2 mm with a trigger force of 50 g.

Then, the stiffness of each of the other Examples and Comparative Examples was calculated based on the stiffness of Comparative Example 1 taken as 100%.

**5-3) Test Example 3: Evaluation of Safety through Nail Penetration Test**

Each of the lithium secondary batteries according to Examples 1-3 and Comparative Examples 1 and 2 was fully charged at room temperature to 4.4 V, and a nail penetration test was carried out under the condition of GB/T (nail diameter 2.5 mm, penetration speed 6 m/min). The test results are shown in the above Table 2.

As can be seen from Table 2, Example 1 wherein degassing is carried out under a relatively low pressure for a relatively long time and Example 2 wherein degassing is carried out under a relatively high pressure for a relatively short time show excellent resistance and life characteristics as compared to the other Examples and Comparative Examples. In addition, Examples 1 and 2 show better results in terms of the mechanical properties of the electrode assembly, as compared to the other Examples and Comparative Examples. In addition, in the case of Example 3, it can be seen that opening-degassing-resealing are carried out under inert gas atmosphere, resulting in an increase in the crosslinking degree of the peripheral portion. As a result, it can be seen that the ion conductivity and life characteristics are ensured to a level sufficient for the operation of the battery, and the battery shows improved mechanical strength.

**Claims**

1. A method for manufacturing a secondary battery containing a gel polymer electrolyte, comprising the steps of:

    (S10) introducing an electrode assembly to a battery casing;
    (S20) injecting a composition for forming a gel polymer electrolyte into the battery casing;
    (S30) primarily sealing the battery casing under the atmosphere and carrying out aging;
    (S40) releasing the primary sealing and carrying out degassing; and
    (S50) subjecting the resultant product of step (S40) to crosslinking,
    wherein the secondary battery comprises a gel polymer electrolyte in which the electrolyte is partially crosslinked to a predetermined crosslinking degree or higher, and the crosslinking degree is increased from the core portion of the battery to the outside of the battery.

2. The method for manufacturing a secondary battery according to claim 1, wherein step (S40) is carried out under a gas atmosphere having a concentration of oxygen of less than 20 vol%, under an atmosphere including 90 vol% or more of nitrogen ($N_2$), or under an atmosphere containing 90 vol% or more of inert gas.

3. The method for manufacturing a secondary battery according to claim 1, wherein the secondary battery comprises a core portion containing a gel polymer electrolyte having a lower crosslinking degree, and a peripheral portion surrounding the core portion and containing a gel polymer electrolyte having a higher crosslinking degree as compared to the core portion.

4. The method for manufacturing a secondary battery according to claim 1, wherein the composition for a gel polymer electrolyte comprises: a lithium salt; a non-aqueous organic solvent; a polymerization initiator; and at least one polymerizable compound selected from the group consisting of a polymerizable monomer, oligomer and copolymer.

5. The method for manufacturing a secondary battery according to claim 1, which further comprises a step of injecting oxygen into the battery casing, before carrying out step (S30).

6. The method for manufacturing a secondary battery according to claim 1, wherein the aging in step (S30) is carried out at a temperature ranging from room temperature to 45°C or higher.

7. The method for manufacturing a secondary battery according to claim 1, wherein the degassing in step (S40) is carried out within such a range that the volume of the battery may be maintained at 75-90 vol% based on 100 vol% of the volume of the battery before releasing the sealing.

8. The method for manufacturing a secondary battery according to claim 1, wherein the crosslinking in step (S50) is carried out at a temperature of 60°C or higher.

9. The method for manufacturing a secondary battery according to claim 1, which further comprises an activation step after carrying out step (S50).

10. A secondary battery which is obtained by the method as defined in claim 1, comprises a gel polymer electrolyte showing a crosslinking degree increasing stepwise or gradually from the inner part of the battery to the outer part of the battery, and has a core portion containing a gel polymer electrolyte having a lower crosslinking degree and a peripheral portion surrounding the core portion and containing a gel polymer electrolyte having a higher crosslinking degree as compared to the core portion.

11. The secondary battery according to claim 10, wherein the peripheral portion has a crosslinking degree of 80 wt% or more, and the core portion has a crosslinking degree of less than 80 wt%.

12. The secondary battery according to claim 10, wherein the core portion has a crosslinking degree of less than 40 wt%.

FIG. 1

10

120      C    P      100

130

FIG. 2

A

130

120      300      100

FIG. 3

<table>
<tr><td colspan="2" align="center">**INTERNATIONAL SEARCH REPORT**</td><td colspan="2">International application No.<br>**PCT/KR2022/016946**</td></tr>
</table>

**A.    CLASSIFICATION OF SUBJECT MATTER**

**H01M 10/058**(2010.01)i; **H01M 10/0565**(2010.01)i

According to International Patent Classification (IPC) or to both national classification and IPC

**B.    FIELDS SEARCHED**

Minimum documentation searched (classification system followed by classification symbols)

H01M 10/058(2010.01); B29C 35/00(2006.01); H01G 11/56(2013.01); H01G 9/20(2006.01); H01M 4/58(2010.01);
H01M 4/62(2006.01); H01M 4/82(2006.01); H01M 50/10(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 겔 폴리머 전해질(gel polymer electrolyte), 가교도
(degree of crosslinking), 디개싱(degassing), 산소(oxygen)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0112656 A (LG CHEM, LTD.) 07 October 2019 (2019-10-07)<br>See paragraphs [0081], [0157], [0175]-[0181], [0184] and [0196]; claim 1; and figure 1. | 1-12 |
| A | KR 10-2013914 B1 (LG CHEM, LTD.) 23 August 2019 (2019-08-23)<br>See paragraphs [0014]-[0016]; claim 14; and figures 1-12. | 1-12 |
| A | JP 2018-107120 A (DAI ICHI KOGYO SEIYAKU CO., LTD.) 05 July 2018 (2018-07-05)<br>See claim 1; and figures 1-3. | 1-12 |
| A | US 2009-0246635 A1 (TAKANO, Yasuo et al.) 01 October 2009 (2009-10-01)<br>See paragraphs [0042]-[0046]. | 1-12 |
| A | KR 10-2020-0099891 A (UBATT INC. et al.) 25 August 2020 (2020-08-25)<br>See paragraphs [0049]-[0054]. | 1-12 |

☐ Further documents are listed in the continuation of Box C.      ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"    document member of the same patent family |
| "P" | document published prior to the international filing date but later than the priority date claimed | |

| Date of the actual completion of the international search | Date of mailing of the international search report |
|---|---|
| **14 February 2023** | **14 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/KR2022/016946**</td></tr>
</table>

| Patent document cited in search report | | | Publication date (day/month/year) | Patent family member(s) | | | Publication date (day/month/year) |
|---|---|---|---|---|---|---|---|
| KR | 10-2019-0112656 | A | 07 October 2019 | CN | 111344889 | A | 26 June 2020 |
| | | | | EP | 3699993 | A1 | 26 August 2020 |
| | | | | EP | 3699993 | A4 | 27 January 2021 |
| | | | | KR | 10-2255539 | B1 | 25 May 2021 |
| | | | | US | 11114698 | B2 | 07 September 2021 |
| | | | | US | 2020-0365933 | A1 | 19 November 2020 |
| | | | | WO | 2019-190128 | A1 | 03 October 2019 |
| KR | 10-2013914 | B1 | 23 August 2019 | CN | 108140884 | A | 08 June 2018 |
| | | | | CN | 108140884 | B | 20 July 2021 |
| | | | | EP | 3327852 | A1 | 30 May 2018 |
| | | | | EP | 3327852 | A4 | 30 May 2018 |
| | | | | EP | 3327852 | B1 | 30 October 2019 |
| | | | | JP | 2018-527706 | A | 20 September 2018 |
| | | | | JP | 6727621 | B2 | 22 July 2020 |
| | | | | KR | 10-2017-0055644 | A | 22 May 2017 |
| | | | | US | 11063294 | B2 | 13 July 2021 |
| | | | | US | 2018-0254522 | A1 | 06 September 2018 |
| | | | | WO | 2017-082618 | A1 | 18 May 2017 |
| JP | 2018-107120 | A | 05 July 2018 | CN | 110140252 | A | 16 August 2019 |
| | | | | JP | 7004545 | B2 | 21 January 2022 |
| | | | | KR | 10-2019-0097070 | A | 20 August 2019 |
| | | | | US | 2021-0135273 | A1 | 06 May 2021 |
| | | | | WO | 2018-123458 | A1 | 05 July 2018 |
| US | 2009-0246635 | A1 | 01 October 2009 | CN | 100524902 | C | 05 August 2009 |
| | | | | CN | 101156259 | A | 02 April 2008 |
| | | | | JP | 2006-278235 | A | 12 October 2006 |
| | | | | JP | 4822726 | B2 | 24 November 2011 |
| | | | | KR | 10-0960779 | B1 | 01 June 2010 |
| | | | | KR | 10-2008-0003793 | A | 08 January 2008 |
| | | | | US | 8354188 | B2 | 15 January 2013 |
| | | | | WO | 2006-112206 | A1 | 26 October 2006 |
| KR | 10-2020-0099891 | A | 25 August 2020 | CN | 113424352 | A | 21 September 2021 |
| | | | | US | 2022-0123361 | A1 | 21 April 2022 |
| | | | | WO | 2020-167022 | A1 | 20 August 2020 |

Form PCT/ISA/210 (patent family annex) (July 2022)

**EP 4 287 341 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210148315